# EUROPÄISCHE PATENTSCHRIFT

(11) **EP 1 907 170 B1**
(45) Veröffentlichungstag und Bekanntmachung des Hinweises auf die Patenterteilung: **09.02.2011**
(21) Anmeldenummer: 06762292.8
(22) Anmeldetag: 30.06.2006
(51) Int. Cl.: B23Q 11/00

(54) **KOPIERFRÄSEINRICHTUNG MIT TRÄGERPLATTE UND GEHÄUSE**
DUPLICATING MILLING DEVICE WITH SUPPORT PLATE AND HOUSING
DISPOSITIF DE FRAISAGE PAR COPIAGE AVEC PLAQUE SUPPORT ET BOITIER

(30) Priorität: 30.06.2005 AT 11042005
(43) Veröffentlichungstag der Anmeldung: 09.04.2008
(73) Patentinhaber: STEGER, Heinrich, 39031 Bruneck (IT)
(72) Erfinder: STEGER, Heinrich, 39031 Bruneck (IT)
(74) Vertreter: Torggler, Paul Norbert
(86) Internationale Anmeldenummer: PCT/EP2006/006348
(87) Internationale Veröffentlichungsnummer: WO 2007/003355

(56) Entgegenhaltungen:
- EP-A1- 0 402 720
- WO-A1-96/05781
- DE-A1- 10 114 917
- DE-C1- 19 626 174
- US-A- 6 101 666
- US-A1- 2004 072 121

## Beschreibung

Die vorliegende Erfindung betrifft eine Trägerplatte für eine Kopierfräseinrichtung mit einer Trägerplatte und einem Gehäuse, wobei an der Trägerplatte ein Formrohling befestigbar ist.

Kopierfräseinrichtungen werden vor allem zur Herstellung von Werkstücken mit komplizierter Raumform verwendet. Dabei wird mittels einer Tastvorrichtung ein Modellkörper mechanisch abgetastet, wobei die Auslenkungen des Tasterstiftes synchron auf ein motorisch angetriebenes Bearbeitungswerkzeug übertragen werden und das Bearbeitungswerkzeug in einer spanenden Bearbeitung, z.B. Fräsen oder Schleifen, einen dem Modellkörper identischen Formkörper aus einem formrohling herausarbeitet. Eine derartige Kopierfräseinrichtung wird beispielsweise in der österreichischen Patentanmeldung Nr. A 1992/2004 der Anmelderin beschrieben.

Die Trägerplatte dient dabei zur Befestigung des Formrohlings, beispielsweise durch Ankleben. Meist wird an der Trägerplatte auch der Modellkörper befestigt.

Bisherige Trägerplatten weisen das Problem auf, dass der beim Fräsen des Formrohlings entstehende Staub den Arbeitsvorgang behindert.

Dokument EP 0 402 720A offenbart ein Kopierfräseinrichtung mit einer Trägerplatte, an der ein Formrohling befestigbar ist. Ein mantelförmiges Gehäuse umschlieβt die Trägerplatte. Dokument DE 10 114 917A offenbart einen Ständer zur Handbearbeitung eines Zahumodells. Der Staub wird von unten abgesaugt.

Aufgabe der Erfindung ist es, eine Kopierfräseinrichtung mit dem Merkmal des Oberbegriffs des Anspruchs 1 derart weiterzubilden, dass dieses Problem behoben wird.

Diese Aufgabe wird durch eine Kopierfräseinrichtung mit den Merkmalen des Anspruchs 1 gelöst.

Die erfindungsgemäße Maßnahme erlaubt das Absaugen des Staubs im Bereich der Unterseite der Trägerplatte, wodurch der Arbeitsvorgang, welcher sich im oberen Bereich der Trägerplatte abspielt, nicht behindert wird.

Beispielsweise kann vorgesehen sein, dass die Trägerplatte eine Öffnung aufweist, die zur Aufnahme des Formrohlings ausgebildet ist. Die Befestigung des Formrohlings kann mittels Klebepunkten erfolgen.

Besonders vorteilhaft ist es, wenn vorgesehen ist, dass an der Trägerplatte ein - vorzugsweise scheibenförmiges - Halteelement lösbar befestigbar ist, wobei das Halteelement die Öffnung für den Formrohling aufweist. Diese Maßnahme gestattet es, den Formrohling außerhalb der Trägerplatte am Halteelement anzubringen und dann das Halteelement samt Formrohling an der Trägerplatte zu befestigen.

Die Befestigung des Halteelements an der Trägerplatte kann vorzugsweise durch zweiteilige Einsätze erfolgen. Diese zweigeteilten Einsätze können um vertikale Achsen gedreht werden, beispielsweise mit einer 90°-Teilung, und werden mittels zweier Konusschrauben fixiert. Dabei ist der obere Teil des Einsatzes so gestaltet, dass durch leichtes Lösen der beiden Konuschrauben und Drehen des Oberteiles um wenige Grade die scheibenförmigen Halteelemente sehr schnell gewechselt werden können.

Bei Verwendung gesonderter Halteelemente bietet es sich an, die wenigstens eine Durchgangsöffnung ebenfalls am Halteelement auszubilden.

Um eine leichte Verdrehbarkeit des Halteelements um eine vertikale Achse sicherzustellen, kann beispielsweise vorgesehen sein, dass das Halteelement einen kreisförmigen Umfangsrand aufweist.

Eine konstruktiv besonders einfache Möglichkeit, ein Halteelement herzustellen, besteht darin, das Halteelement in Form eines Ringes auszubilden, wobei der Ring von zwei Stegen so durchquert wird, dass der Innenbereich des Ringes drei Öffnungen aufweist. Die zentrale Öffnung kann dabei zur Befestigung des Formrohlings dienen. Die beiden flankierenden Öffnungen bildeten die Durchgangsöffnungen für den beim Fräsen des Formrohlings entstehenden Staub.

Erfindungsgemäβ ist dabei vorgesehen, dass die Kopierfräseinrichtung ein die Trägerplatte mantelförmig umschließendes Gehäuse aufweist, wobei das Gehäuse zwischen der Basisplatte und der Trägerplatte angeordnet bzw. anordenbar ist und eine Durchtrittsöffnung für den abzusaugenden Staub aufweist, wobei es sich für eine einfache Montage und Demontage als vorteilhaft herausgestellt hat, wenn das Gehäuse wenigstens zwei Teile aufweist, wobei an einem ersten Teil eine Anschlussvorrichtung für eine Absaugvorrichtung angeordnet bzw. anordenbar ist.

Dabei sieht eine erste Variante vor, dass die beiden Teile des Gehäuses im Wesentlichen flächig ausgebildet sind und auf gegenüberliegenden Seiten der vertikalen Träger für das Tragelement mittels Schrauben oder magnetisch an diesen befestigbar sind.

Alternativ ist es jedoch auch denkbar, dass die beiden Teile des Gehäuses halbschalenförmig ausgebildet sind und magnetisch miteinander und/oder mit den vertikalen Trägern für das Tragelement verbunden bzw. verbindbar sind.

Weitere Vorteile und Einzelheiten der Erfindung ergeben sich anhand der nachfolgenden Figuren sowie der Figurenbeschreibung. Dabei zeigen:
- Fig. 1: in perspektivischer Ansicht eine Kopierfräseinrichtung,
- Fig. 2a, 2b: Detailansichten einer Trägerplatte mit daran befestigtem Formrohling,
- Fig. 3a, 3b, 3c, 3d: Ausführungsbeispiele von unterschiedlich ausgestalteten Halte- elementen,
- Fig. 4: eine Explosionsdarstellung einer Trägerplatte mit zweiteiligen Einsätzen,
- Fig. 5: eine Teilansicht einer Kopierfräseinrichtung mit einer Absaugvorrichtung,
- Fig. 6a, 6b: ein erstes Ausführungsbeispiel eines erfindungsgemäßen Gehäuses in Draufsicht und einer perspektivischen Seitenansicht und
- Fig. 7a, 7b: ein zweites Ausführungsbeispiel eines erfindungsgemäßen Gehäuses.

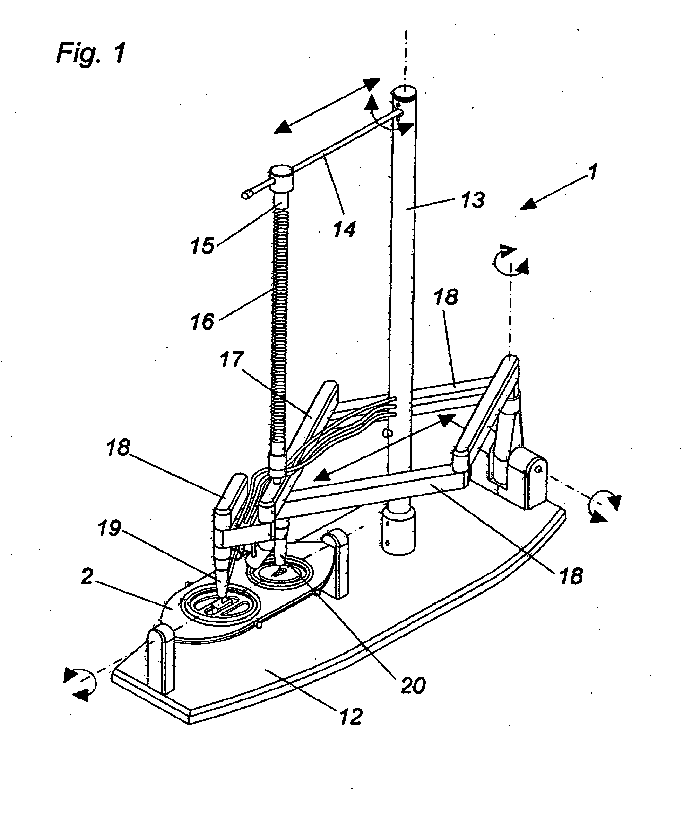

In Fig. 1 ist schematisch eine Kopierfräseinrichtung 1 dargestellt, wobei insbesondere die Trägerplatte 2 erkennbar ist. Auf einer Basisplatte 12 ist ein vertikaler Träger 13 angeordnet, an dem über eine Haltevorrichtung 14 ein Widerlager 15 für eine Feder 16 gelagert ist. Das Widerlager 15 ist an der Haltevorrichtung 14 in Längsrichtung der Haltevorrichtung 14 verschiebbar gelagert. Auf diese Weise wird sichergestellt, dass das Widerlager 15 der Feder 16 dem Angriffspunkt der Feder 16 am Ausleger 17 bei Lageänderungen folgen kann, sodass die Feder 16 während des gesamten Fräsvorganges im Wesentlichen vertikal ausgerichtet ist. Über eine storchenschnabelartige Anordnung von miteinander drehwinklig verbundenen Hebeln 18 sind ein motorisch angetriebenes Verarbeitungswerkzeug 19 zum Fräsen des Formrohlings sowie eine Tastvorrichtung 20 zum Abtasten des Modellkörpers angeordnet.

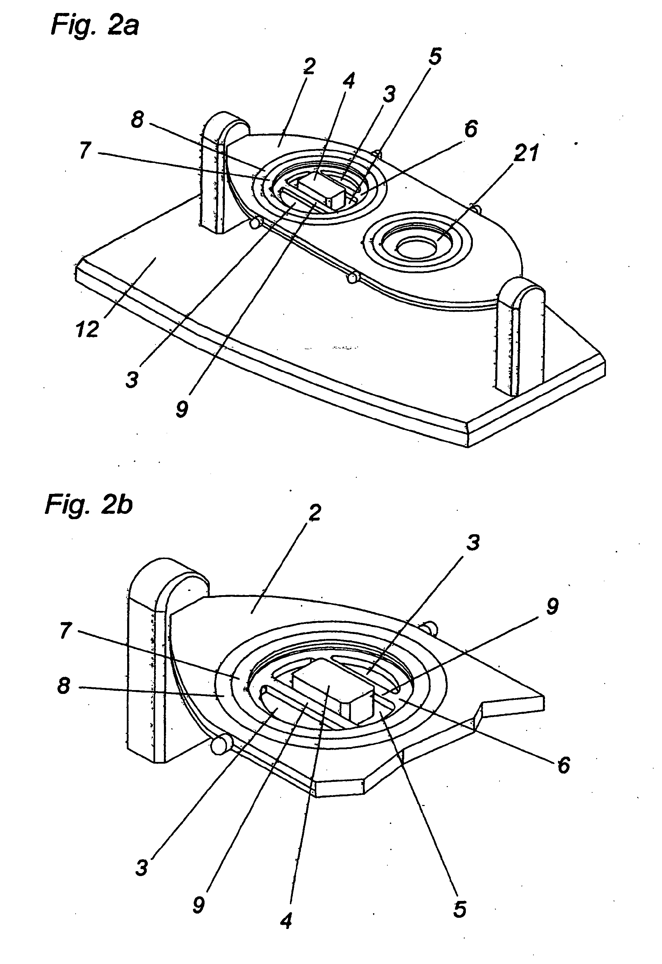

Die Fig. 2a und 2b zeigen in unterschiedlichen Vergrößerungsstufen eine Detailansicht der Trägerplatte 2. Erkennbar ist, dass die Trägerplatte 2 ein Halteelement 6 für einen Formrohling 4 aufweist, wobei das Halteelement 6 mittels zweiteiliger Einsätze 7, 8 an der Trägerplatte 2 befestigt ist. Der Formrohling 4 ist durch Klebepunkte an den Stegen 9 des Halteelements 6 befestigt. Gut erkennbar sind die beidseitig des Formrohlings angeordneten Durchgangsöffnungen 3, durch welche der beim Fräsen des Formrohlings 4 entstehende Staub in Richtung der Bodenplatte 12 durch die Trägerplatte 2 hindurch treten kann. Ebenso erkennbar ist, dass an einem weiteren Halteelement 21 ein in den Fig. 2a und 2b nicht dargestellter Modellkörper an der Trägerplatte 2 befestigt werden kann. Da im Bereich des Modellkörpers kein Staub entsteht, ist es nicht notwendig, das Halteelement 21 mit Durchgangsöffnungen 3 zu versehen.

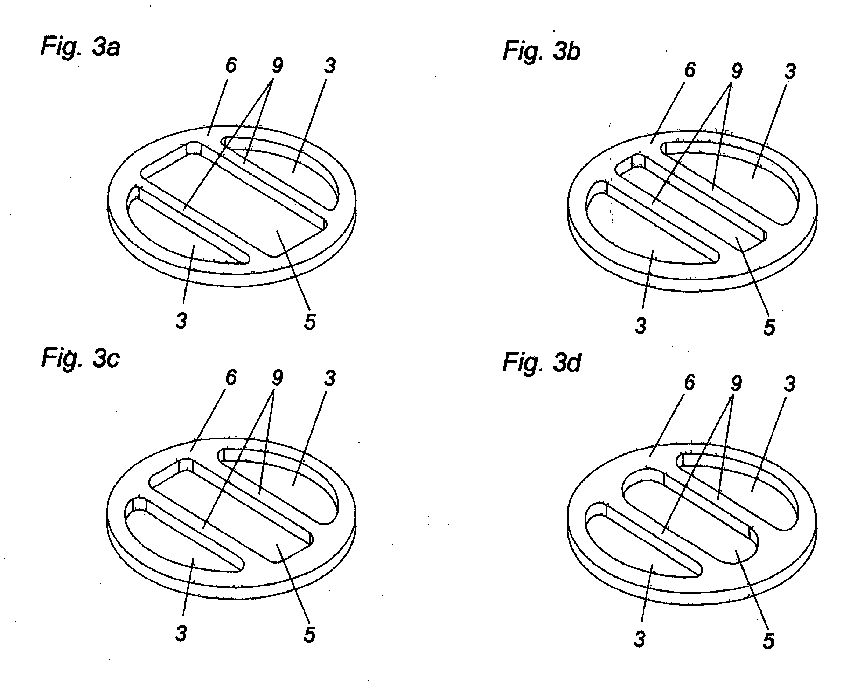

Verschiedene Möglichkeiten zur Ausgestaltung des Halteelements 6 gehen aus den Fig. 3a bis 3d hervor. Durch die unterschiedlichen Ausführungsmöglichkeiten können unterschiedlichste Formrohlinge am Halteelement 6 angeordnet werden. Erkennbar ist, dass jeweils ein Halteelement 6 in form eines Kreisringes gewählt wurde, wobei zwei Stege 9 derart verlaufen, dass das Innere des Kreisrings drei Öffnungen 3, 5 aufweist. In der zentralen Öffnung 5 kann dabei jeweils der Formrohling befestigt werden. Die Durchgangsöffnungen 3 dienen zum Abführen des beim Fräsen entstehenden Staubes.

Die Form des Halteelements 6 ist nicht auf die in den Fig. 3a bis 3d dargestellte Form beschränkt. Obwohl die in den Fig. 3a bis 3d dargestellte Ausbildung mit einem kreisförmigen Umfangsrand wegen der leichten Verdrehbarkeit in der Ebene der Trägerplatte 2 besonders vorteilhaft ist, sind prinzipiell auch andere Ausbildungen wie beispielsweise mit einem polygonalen Umfangsrand denkbar.

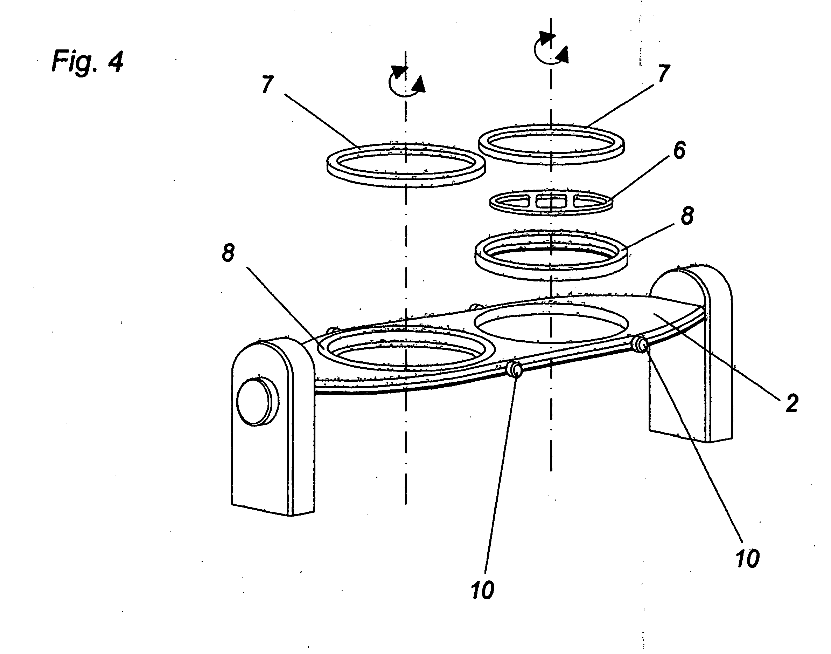

In Fig. 4, welche eine Explosionsdarstellung zeigt, wird die Befestigung des Halteelements 6 an der Trägerplatte 2 mittels der zweiteiligen Einsätze 7, 8 erkennbar. Dabei wird in die Durchtrittsöffnung der Trägerplatte 2 zuerst der untere Teil 8 des zweiteiligen Einsatzes 7, 8 eingelegt. Danach folgen des Halteelement 6, welches mit dem oberen Teil 7 des zweiteiligen Einsatzes 7, 8 festgeklemmt wird. Die zweiteiligen Einsätze 7, 8 können um die dargestellte vertikale Achse gedreht und mittels der Konusschrauben 10 fixiert werden. In Fig. 4 ist auf der linken Seite eine weitere Durchtrittsöffnung für ein nicht dargestelltes Halteelement 21 für den Modellkörper erkennbar. Auch dieses Halteelement 21 kann über die zweiteiligen Einsätze 7, 8 an der Trägerplatte 2 befestigt werden.

Das Halteelement 6 für den Formrohling 4 kann beispielsweise aus Aluminium hergestellt werden. Es hat sich als günstig herausgestellt, das Halteelement 21 für den Modellkörper aus fräsbarem Kunststoff herzustellen. Dabei wird zuerst die Kunststoffscheibe in eine Aluscheibe eingeklebt, nachher der erforderliche Durchbruch im Halteelement 21 für den Modellkörper herausgefräst und der Modellkörper beispielsweise mittels Schnellkleber in das Halteelement 21 eingeklebt.

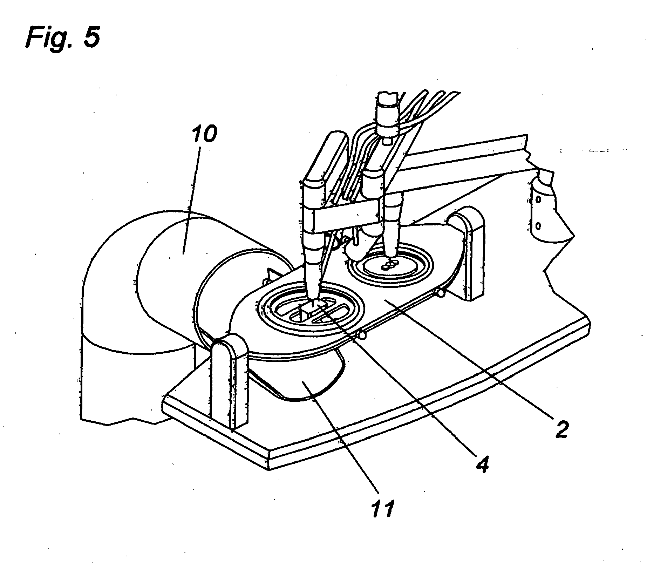

Fig. 5 zeigt schematisch die Anordnung einer Absaugvorrichtung 10 zum Entfernen des beim Fräsen des Formrohlings 4 entstehenden Staubs. Der Staub kann dabei durch die Durchgangsöffnungen 3 durch die Trägerplatte 2 hindurch treten und wird durch ein vorzugsweise angeordnetes Blech 11 aufgefangen und mittels der Absaugvorrichtung 10 entfernt.

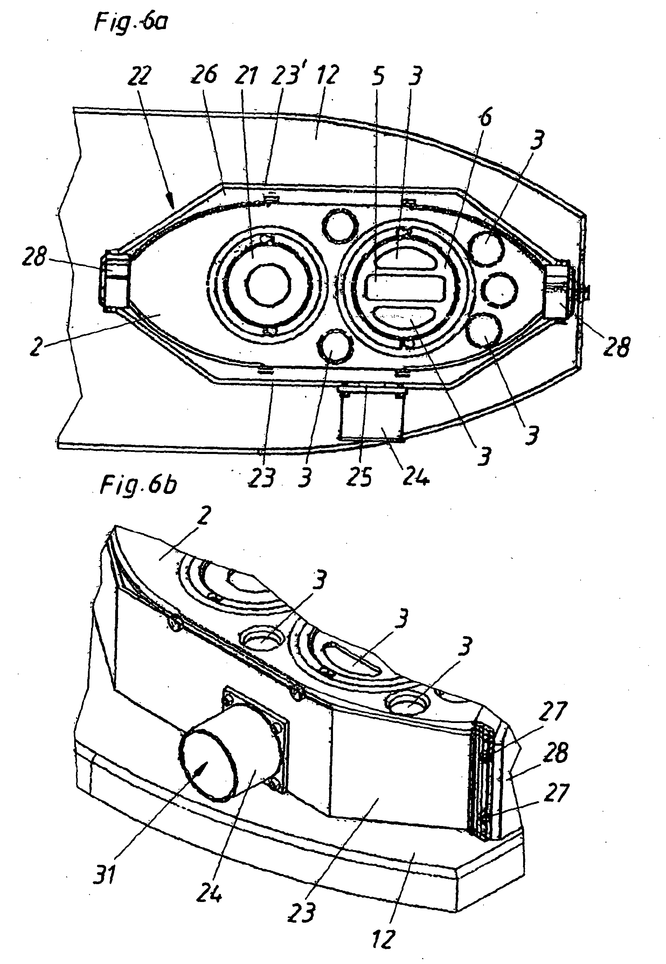

In den Fig. 6a und 6b ist ein erstes Ausführungsbeispiel einer Kopierfräseinrichtung dargestellt, bei dem die Trägerplatte 2 von einem Gehäuse 22 umschlossen ist. Das Gehäuse 22 weist zwei Teile 23, 23' auf, die flächig ausgebildet sind und die Trägerplatte 2 allseitig umschließen. Zum Absaugen des beim Kopierfräsen entstehenden Staubes ist auf dem ersten Teil 23 des Gehäuses 22 eine Anschlussvorrichtung 24 für eine Absaugvorrichtung 10 angeordnet, die beim gezeigten Ausführungsbeispiel rohrförmig ausgebildet ist und eine Durchtrittsöffnung 31 aufweist, wobei die Anschlussvorrichtung 24 am ersten Teil 23 des Gehäuses 22 derart angeordnet ist, dass sich die Durchtrittsöffnung 31 der Anschlussvorrichtung 24 mit der Durchtrittsöffnung 25 des ersten Teiles 23 des Gehäuses 22 deckt.

Damit der beim Fräsen des Formrohlings, der in der Öffnung 5 des Halteelementes 6 angeordnet ist, entstehende Staub in das Gehäuse 22 durchtreten kann, weist die Trägerplatte 2 mehrere Durchgangsöffnungen 3 auf. Aus dem gleichen Grund ist das Gehäuse 22 etwas größer als die Trägerplatte 2 ausgebildet, sodass zwischen dem Gehäuse 22 und der Trägerplatte 2 ein umlaufender Spalt 26 verbleibt, durch den der Staub ebenfalls nach unten abgesaugt werden kann.

Beim dargestellten Ausführungsbeispiel sind die beiden Teile 23, 23' des Gehäuses 22 mittels der Schraube 27 an den vertikalen Trägern 28 für die Trägerplatte 2 befestigt. Selbstverständlich sind auch andere Befestigungsmöglichkeiten, beispielsweise die Befestigung mittels Magneten, denkbar. Grundsätzlich sollten die beiden Teile 23, 23' des Gehäuses 22 für Reinigungszwecke schnell und einfach entfernt werden können.

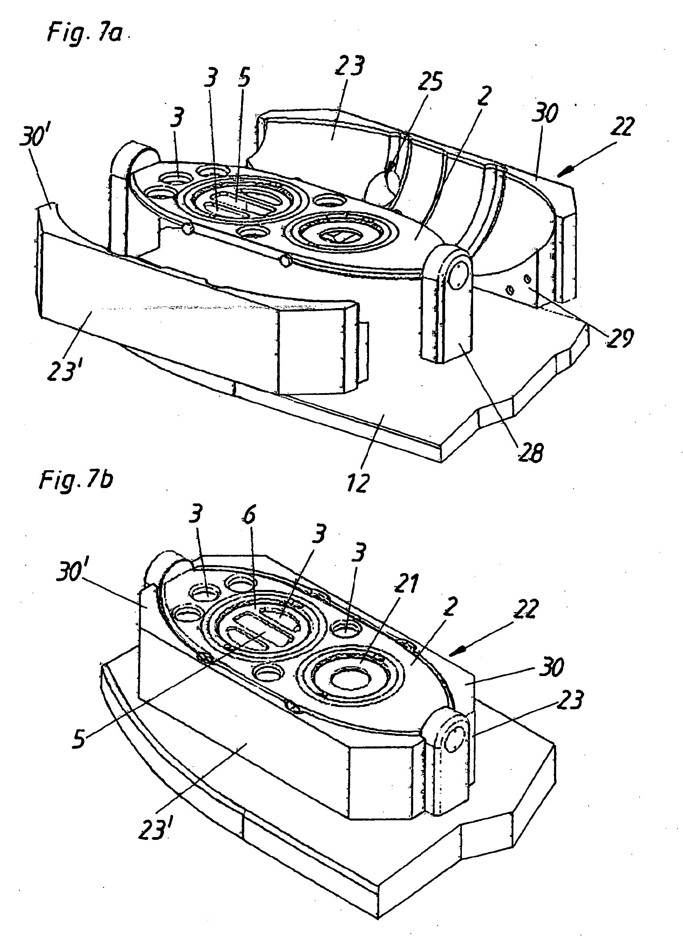

Die Fig. 7a und 7b zeigen ein zweites Ausführungsbeispiel eines erfindungsgemäßen Gehäuses 22, bei dem die beiden Teile 23, 23' halbschatenförmig ausgebildet sind, wobei die im montierten Zustand des Gehäuses 22 aneinander liegenden Flächen 29 magnetisch ausgebildet sind, was eine schnelle und einfache Montage und Demontage erlaubt.

Wiederum weist der erste Teil 23 des Gehäuses 22 eine Durchtrittsöffnung 25 für den abzusaugenden Staub auf.

Wie insbesondere aus Fig. 7b ersichtlich ist bei diesem Ausführungsbeispiel das Gehäuse 22 der Form nach der Trägerplatte 2 angepasst, sodass der zwischen der Oberseite 30 des Gehäuses 22 und der Trägerplatte 2 verbleibende Spalt wesentlich kleiner ist als bei Ausführungsbeispiel der Fig. 6.

## Patentansprüche

1. Kopierfräseinrichtung mit einer Trägerplatte an der ein Formrohling befestigbar ist und die wenigstens eine Durchgangsöffnung aufweist, die derart angeordnet ist, dass der beim Fräsen des Formrohlings entstehende Staub durch sie hindurch tretbar ist, wobei die kopierfräseinrichtung ein die Trägerplatte (2) mantelförmig umschließendes Gehäuse (22) aufweist, wobei das Gehäuse (22) zwischen einer Basisplatte (12) und der Trägerplatte (2) angeordnet bzw. anordenbar ist und eine Durchtrittsöffnung (25) für den abzusaugenden Staub aufweist.

2. Kopierfräseinrichtung nach Anspruch 1, wobei das Gehäuse (22) wenigstens zwei Teile (23, 23') aufweist, wobei an einem ersten Teil (23) eine Anschlussvorrichtung (24) für eine Absaugvorrichtung (10) angeordnet bzw. anordenbar ist.

3. Kopierfräseinrichtung nach Anspruch 2, wobei die Anschlussvorrichtung (24) eine Durchtrittsöffnung (31) aufweist, wobei die Anschlussvorrichtung (24) am ersten Teil (23) des Gehäuses (22) derart angeordnet ist, dass sich die Durchtrittsöffnung (31) der Anschlussvorrichtung (24) mit der Durchtrittsöffnung (25) des ersten Teiles (23) des Gehäuses (22) deckt.

4. Kopierfräseinrichtung nach Anspruch 2 oder 3, wobei die Anschlussvorrichtung (24) rohrförmig ausgebildet ist.

5. Kopierfräseinrichtung nach einem der Ansprüche 2 - 4, wobei die beiden Teile (23, 23') des Gehäuses (22) im Wesentlichen flächig ausgebildet sind und auf gegenüberliegenden Seiten der vertikalen Träger (28) für das Tragelement (2) mittels Schrauben (27) oder magnetisch an diesen befestigbar sind.

6. Kopierfräseinrichtung nach einem der Ansprüche 2 - 4, wobei die beiden Teile (23, 23') des Gehäuses (22) halbschalenförmig ausgebildet sind und magnetisch miteinander und/oder mit den vertikalen Trägern (28) für das Tragelement (2) verbunden bzw. verbindbar sind.

7. Kopierfräseinrichtung nach einem der Ansprüche 1 - 6, wobei das Gehäuse (22) größer als die Trägerplatte (2) ausgebildet, sodass zwischen der Oberseite (30) des Gehäuses (22) und der Trägerplatte (2) ein umlaufender Spalt (26) verbleibt.

8. Kopierfräseinrichtung nach einem der Ansprüche 1 bis 7, wobei an der Trägerplatte (2) ein - vorzugsweise scheibenförmiges - Halteelement (6) lösbar befestigbar ist, wobei das Halteelement (6) die Öffnung (5) für den Formrohling (4) aufweist.

9. Kopierfräseinrichtung nach Anspruch 8, wobei das Halteelement (6) eine Aufnahme für einen Formrohling (4) und eine Durchgangsöffnung (3) aufweist.

10. Kopierfräseinrichtung nach einem der Ansprüche 1-9, wobei sie eine Absaugvorrichtung (11) für den beim Fräsen des Formrohlings (4) entstehenden Staub aufweist.

## Claims

1. A copy milling device comprising a carrier plate to which a shaping blank can be fastened and which has at least one through opening so arranged that the dust produced when milling the shaping blank can pass therethrough, wherein the copy milling device has a housing (22) surrounding the carrier plate (2) in casing form, wherein the housing is or can be arranged between a base plate (12) and the carrier plate (2) and has a through opening (25) for the dust to be sucked away.

2. A copy milling device according to claim 1 wherein the housing (22) has at least two parts (23, 23'), wherein a connecting device (24) for a suction removal device (10) is or can be arranged at a first part (23).

3. A copy milling device according to claim 2 wherein the connecting device (24) has a through opening (31), wherein the connecting device (24) is arranged at the first part (23) of the housing (22) in such a way that the through opening (31) of the connecting device (24) is aligned with the through opening (26) of the first part (23) of the housing (22).

4. A copy milling device according to claim 2 or claim 3 wherein the connecting device (24) is tubular.

5. A copy milling device according to one of claims 2 to 4 wherein the two parts (23, 23') of the housing (22) are substantially flat and on opposite sides of the vertical carriers (28) for the carrier element (2) can be fastened thereto by means of screws (27) or magnetically.

6. A copy milling device according to one of claims 2 to 4 wherein the two parts (23, 23') of the housing (22) are of a half-shell shape and are or can be connected magnetically to each other and/or to the vertical carriers (28) for the carrier element (2).

7. A copy milling device according to one of claims 1 to 6 wherein the housing (22) is larger than the carrier plate (2) so that a peripherally extending gap (26) remains between the top side (30) of the housing (22) and the carrier plate (2).

8. A copy milling device according to one of claims 1 to 7 wherein a preferably disc-shaped holding element (6) can be releasably fastened to the carrier plate (2), wherein the holding element (6) has the opening (5) for the shaping blank (4).

9. A copy milling device according to claim 8 wherein the holding element (6) has a receiving means for a shaping blank (4) and a through opening (3).

10. A copy milling device according to one of claims 1 to 9 wherein it has a suction removal device (11) for the dust produced when milling the shaping blank (4).

## Revendications

1. Dispositif de fraisage par copiage avec une plaque support sur laquelle une ébauche de moule peut être fixée et qui présente au moins une ouverture de passage qui est agencée de telle sorte que la poussière générée lors du fraisage de l'ébauche de moule peut la traverser, dans lequel le dispositif de fraisage par copiage présente un boîtier (22) entourant la plaque support (2) à la manière d'une enveloppe, dans lequel le boîtier (22) est agencé ou peut être agencé entre une plaque de base (12) et la plaque support (2) et présente une ouverture de traversée (25) pour la poussière à aspirer.

2. Dispositif de fraisage par copiage selon la revendication 1, dans lequel le boîtier (22) présente au moins deux parties (23, 23'), dans lequel un dispositif de raccordement (24) pour un dispositif d'aspiration (10) est agencé ou peut être agencé à une première partie (23).

3. Dispositif de fraisage par copiage selon la revendication 2, dans lequel le dispositif de raccordement (24) présente une ouverture de traversée (31), dans lequel le dispositif de raccordement (24) est agencé à la première partie (23) du boîtier (22) de telle sorte que l'ouverture de traversée (31) du dispositif de raccordement (24) coïncide avec l'ouverture de traversée (25) de la première partie (23) du boîtier (22).

4. Dispositif de fraisage par copiage selon la revendication 2 ou 3, dans lequel le dispositif de raccordement (24) est réalisé en forme de tube.

5. Dispositif de fraisage par copiage selon l'une quelconque des revendications 2 à 4, dans lequel les deux parties (23, 23') du boîtier (22) sont réalisées de manière essentiellement plane et peuvent être fixées sur des côtés opposés du support vertical (28) pour l'élément support (2) à l'aide de vis (27) ou magnétiquement sur celui-ci.

6. Dispositif de fraisage par copiage selon l'une quelconque des revendications 2 à 4, dans lequel les deux parties (23, 23') du boîtier (22) sont réalisées en forme de demi-coques et sont reliées ou peuvent être reliées magnétiquement l'une à l'autre et/ou aux supports verticaux (28) pour l'élément support (2).

7. Dispositif de fraisage par copiage selon l'une quelconque des revendications 1 à 6, dans lequel le boîtier (22) est réalisé plus grand que la plaque support (2), si bien qu'il reste une fente périphérique (26) entre la face supérieure (30) du boîtier (22) et la plaque support (2).

8. Dispositif de fraisage par copiage selon l'une quelconque des revendications 1 à 7, dans lequel un élément de retenue (6), de préférence en forme de disque, peut être fixé de manière amovible sur la plaque support (2), dans lequel l'élément de retenue (6) présente l'ouverture (5) pour l'ébauche de moule (4).

9. Dispositif de fraisage par copiage selon la revendication 8, dans lequel l'élément de retenue (6) présente un logement pour une ébauche de moule (4) et une ouverture de passage (3).

10. Dispositif de fraisage par copiage selon l'une quelconque des revendications 1 à 9, dans lequel il présente un dispositif d'aspiration (11) pour la poussière générée lors du fraisage de l'ébauche de moule (4).
